# EUROPÄISCHE PATENTSCHRIFT

(11) **EP 3 540 248 B1**
(45) Veröffentlichungstag und Bekanntmachung des Hinweises auf die Patenterteilung: **06.01.2021**
(21) Anmeldenummer: 19161946.9
(22) Anmeldetag: 11.03.2019
(51) Int. Cl.: F16C 1/14, F16C 1/10

(54) **ANORDNUNG ZUR SCHWINGUNGSISOLIERUNG BOWDENZUGBETÄTIGTER KOMPONENTEN**
ASSEMBLY FOR VIBRATION ISOLATION OF BOWDEN CABLE-ACTUATED COMPONENTS
DISPOSITIF D'ISOLATION DES VIBRATIONS DE COMPOSANTS ACTIONNÉ PAR UN CÂBLE BOWDEN

(30) Priorität: 13.03.2018 DE 102018203762
(43) Veröffentlichungstag der Anmeldung: 18.09.2019
(73) Patentinhaber: Deere & Company, Moline, IL 61265 (US)
(72) Erfinder: Wilken, Nils, 68163 Mannheim (DE); Schulitz, Jörg, 68163 Mannheim (DE)
(74) Vertreter: Stein, Stefan

(56) Entgegenhaltungen:
- EP-A1- 1 041 302
- EP-A1- 2 278 178
- DE-A1- 10 216 903
- DE-A1- 19 927 055
- DE-U1- 8 810 699

## Beschreibung

Die Erfindung betrifft eine Anordnung zur Schwingungsisolierung bowdenzugbetätigter Komponenten, wie sie zum Beispiel aus der EP 2 278 178 A1 bekannt ist.

Aufgrund ihrer Flexibilität und Robustheit finden in Fahrzeugen nach wie vor Bowdenzüge zur Steuerung diverser mechanischer Funktionen Verwendung. Über den Bowdenzug können jedoch unerwünschte Schwingungen auf ein zu dessen Betätigung vorgesehenes Geberelement übertragen werden. Dies kann wiederum zu einem störenden Schwingungseintrag in eine Fahrerumgebung des Fahrzeugs führen, in der sich das Geberelement räumlich befindet.

Es ist daher Aufgabe der vorliegenden Erfindung, eine an die Verwendung mit bowdenzugbetätigten Komponenten angepasste Anordnung zur Schwingungsisolierung anzugeben.

Diese Aufgabe wird durch eine Anordnung mit den Merkmalen des Patentanspruchs 1 gelöst.

Die erfindungsgemäße Anordnung zur Schwingungsisolierung bowdenzugbetätigter Komponenten umfasst einen Bowdenzug, ein an dem Bowdenzug endseitig angebrachtes Betätigungselement mit einem Montageauge, ein in dem Montageauge formschlüssig angeordnetes Dämpfungselement, sowie ein innerhalb des Dämpfungselements gelagertes auslenkbares Geberelement zur Betätigung des Bowdenzugs, wobei das Dämpfungselement als elastische Tülle mit einer in einer vorgegebenen Auslenkungsrichtung des Geberelements liegenden Aussparung derart ausgebildet ist, dass das Geberelement in unbetätigtem Zustand innerhalb der elastischen Tülle eine mittenzentrierte Stellung einnimmt und bei Einwirkung einer auslenkenden Betätigungskraft unter Kompression der elastischen Tülle im Bereich der Aussparung mit dem Montageauge unmittelbar in Anlage bringbar ist.

Mit anderen Worten wird das Geberelement in unbetätigtem, mithin kraftfreiem Zustand von der elastischen Tülle allseitig gegenüber dem Betätigungselement auf Abstand gehalten, sodass ein möglicher Schwingungseintrag über den daran angebrachten Bowdenzug auf das Geberelement weitgehend ausgeschlossen ist. Für den Fall seiner Auslenkung lässt sich das Geberelement hingegen aufgrund der zum Betätigen des Bowdenzugs aufgebrachten Zug- bzw. Druckkraft innerhalb des Montageauges unmittelbar an das Betätigungselement pressen, was zu einem präzise definierten Druckpunkt führt. Die Auslenkung des Geberelements kann hierbei über ein mit dem Geberelement verbundenes Bedienelement oder dergleichen erfolgen.

Weitere vorteilhafte Ausgestaltungen der erfindungsgemäßen Anordnung gehen aus den Unteransprüchen hervor.

Die Verwendung der erfindungsgemäßen Anordnung bietet sich beispielsweise im Zusammenhang mit bowdenzugbetätigten Fahrzeugkomponenten an, die sich während des Fahrtbetriebs des Fahrzeugs in entspanntem Zustand befinden, denn der Bowdenzug sowie das damit verbundene Geberelement sind in einem solchen Fall typischerweise kraftfrei. Insbesondere kann das Geberelement Bestandteil eines als Hand- oder Fußhebel ausgebildeten Bedienelements für ein Fahrzeug sein, das zur Betätigung einer während der Fahrt zu lösenden Feststell- oder Parkbremse vorgesehen ist.

An der elastischen Tülle kann ein an einer jeweiligen Stirnseite des Montageauges umlaufender Kragen ausgebildet sein. Der umlaufende Kragen dient der Axialzentrierung der elastischen Tülle innerhalb des Montageauges.

Zur Verwirklichung einer Verdrehsicherung bzw. Radialzentrierung der elastischen Tülle innerhalb des Montageauges ist es möglich, dass an einer Stirnseite des Montageauges wenigstens ein Vorsprung vorgesehen ist, der in eine zugehörige Ausnehmung im Kragen der elastischen Tülle eingreift. Bei dem Vorsprung kann es sich um einen Federstift handeln, der mit beidseitigem Überstand in eine stirnseitig eingebrachte Durchgangsbohrung am Montageauge eingepresst ist und in damit fluchtende Öffnungen im Kragen der elastischen Tülle hineinragt.

Zusätzlich oder alternativ besteht die Möglichkeit, dass die elastische Tülle eine mit einer asymmetrischen Innenkontur des Montageauges korrespondierende Außenkontur aufweist, wodurch ebenfalls eine Verdrehsicherung bzw. Radialzentrierung der elastischen Tülle innerhalb des Montageauges verwirklicht ist. Zu diesem Zweck können entlang der asymmetrischen Innenkontur des Montageauges verlaufende Quertaschen ausgebildet sein, in die an der Außenkontur der elastischen Tülle ausgeformte Querbacken formschlüssig eingreifen.

Im Hinblick auf die Erzielung einer möglichst hohen Dämpfungswirkung kann die elastische Tülle aus einer Gummimischung mit einer Härte im Bereich von 20 bis 90 Shore A bestehen. Da die elastische Tülle in unbetätigtem Zustand des Geberelements im Wesentlichen kraftfrei und damit unkomprimiert bzw. entspannt ist, besteht die Möglichkeit der Verwendung einer vergleichsweise weichen Gummimischung mit entsprechend hohem Schwingungstilgungsvermögen.

Die erfindungsgemäße Anordnung wird im Folgenden anhand der beigefügten Zeichnungen näher erläutert. Hierbei sind identische bzw. bezüglich ihrer Funktion vergleichbare Komponenten mit denselben Bezugszeichen gekennzeichnet. Es zeigen:
- Fig. 1: eine perspektivische Schnittdarstellung eines ersten Ausführungsbeispiels der erfindungsgemäßen Anordnung zur Schwingungsisolierung bowdenzugbetätigter Komponenten,
- Fig. 2: eine Aufsicht der in Fig. 1 dargestellten Anordnung,
- Fig. 3: eine perspektivische Ansicht eines von der Anordnung gemäß Fig. 1 umfassten Betätigungselements,
- Fig. 4: eine perspektivische Ansicht eines von der Anordnung gemäß Fig. 1 umfassten Dämpfungselements in Gestalt einer elastischen Tülle,
- Fig. 5: eine perspektivische Schnittdarstellung eines zweiten Ausführungsbeispiels der erfindungsgemäßen Anordnung zur Schwingungsisolierung bowdenzugbetätigter Komponenten,
- Fig. 6: eine perspektivische Ansicht eines von der Anordnung gemäß Fig. 5 umfassten Betätigungselements, und
- Fig. 7: eine perspektivische Ansicht eines von der Anordnung gemäß Fig. 5 umfassten Dämpfungselements in Gestalt einer abgewandelten elastischen Tülle.

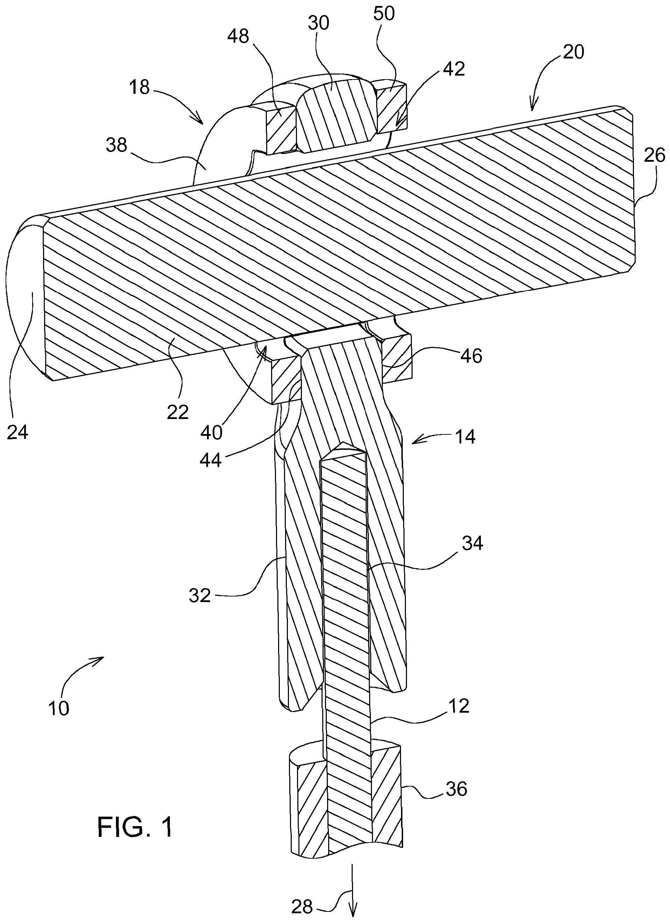

Fig. 1 zeigt eine perspektivische Schnittdarstellung eines ersten Ausführungsbeispiels der erfindungsgemäßen Anordnung zur Schwingungsisolierung bowdenzugbetätigter Komponenten.

Die Anordnung 10 umfasst einen Bowdenzug 12, ein an dem Bowdenzug 12 endseitig angebrachtes Betätigungselement 14 mit einem Montageauge 16, ein in dem Montageauge 16 formschlüssig angeordnetes Dämpfungselement 18, sowie ein innerhalb des Dämpfungselements 18 gelagertes auslenkbares Geberelement 20.

Beispielsgemäß weist das Geberelement 20 die Gestalt eines zylindrischen Stifts 22 auf, der Bestandteil eines als Hand- oder Fußhebel ausgebildeten (in Fig. 1 nicht wiedergegebenen) Bedienelements für ein Fahrzeug ist, das zur Betätigung einer während der Fahrt zu lösenden Feststell- oder Parkbremse vorgesehen ist. Der zylindrische Stift 22 erstreckt sich durch das Dämpfungselement 18 hindurch und ist an seinen offenen Enden 24, 26 mit einer Betätigungsmechanik des Hand- oder Fußhebels verbunden, mittels derer der zylindrische Stift 22 in einer vorgegebenen Auslenkungsrichtung 28 betätigbar bzw. verlagerbar ist.

Das Betätigungselement 14 umfasst einen abgeflachten Kopf 30, in dem das Montageauge 16 ausgebildet ist, sowie einen zylindrischen Befestigungsabschnitt 32 zur Anbringung des Bowdenzugs 12. Die Anbringung des Bowdenzugs 12 erfolgt durch Herstellung einer Pressverbindung innerhalb einer stirnseitigen Aufnahmeöffnung 34 des zylindrischen Befestigungsabschnitts 32. Bei dem Betätigungselement 14 handelt es sich um ein aus einer geeigneten Stahllegierung bestehendes Schmiedeteil oder ein hochfestes Kunststoffteil. Eine Kunststoffummantelung 36 dient dem Schutz des aus einer Vielzahl von Stahllitzen bestehenden Bowdenzugs 12 vor äußeren Beschädigungen.

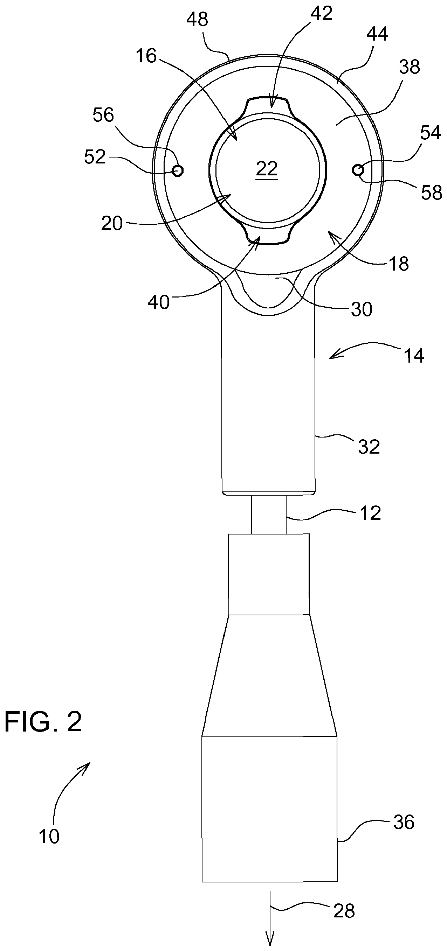

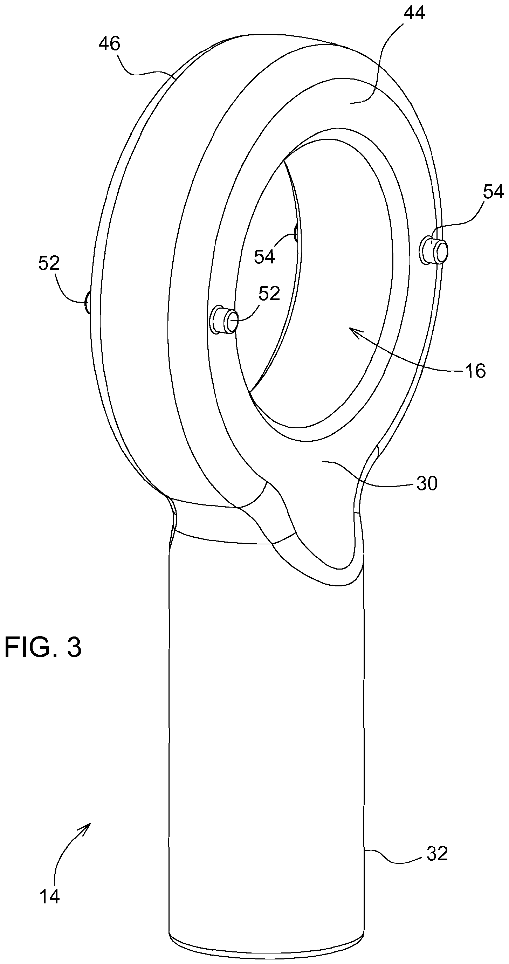

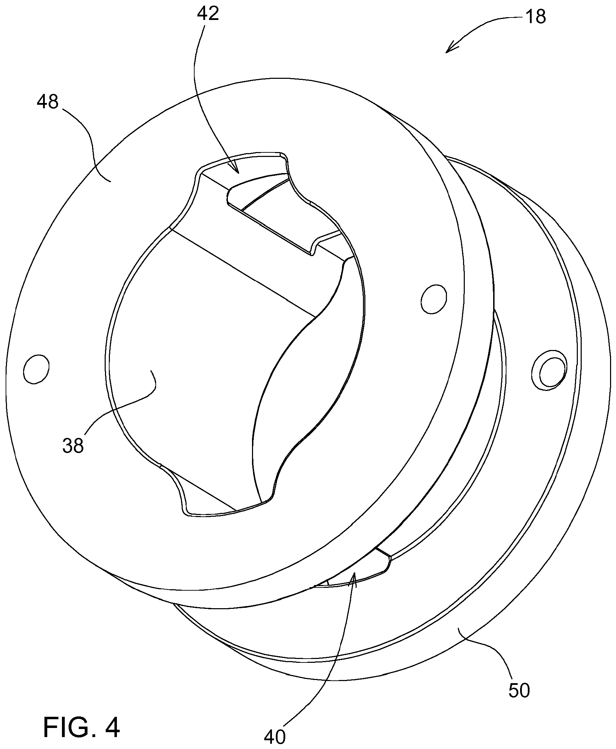

Fig. 2 zeigt eine Aufsicht der in Fig. 1 dargestellten Anordnung 10, wobei das Betätigungselement 14 in Fig. 3 und das Dämpfungselement 18 in Fig. 4 detailliert wiedergegeben ist.

Demgemäß ist das Dämpfungselement 18 als elastische Tülle 38 mit einer in der vorgegebenen Auslenkungsrichtung 28 des Geberelements 20 liegenden Aussparung 40 derart ausgebildet, dass das Geberelement 20 in unbetätigtem Zustand innerhalb der elastischen Tülle 38 eine mittenzentrierte Stellung einnimmt und bei Einwirkung einer über den Hand- bzw. Fußhebel ausgeübten auslenkenden Betätigungskraft F_{b} unter Kompression der elastischen Tülle 38 im Bereich der Aussparung 40 mit dem Montageauge 16 in Anlage gebracht wird. Letzteres ist in Fig. 2 durch einen strichliniert dargestellten betätigten Zustand des Geberelements 20 veranschaulicht. Bei der Aussparung 40 handelt es sich um eine materialfreie Zone mit taschenförmiger Ausbildung, die sich bis hin zum Rand des Montageauges 16 erstreckt, wobei deren Breite geringer ist als der Durchmesser des Geberelements 20 bzw. des zylindrischen Stifts 22. Letzteres ist erforderlich, um auch in der vorgegebenen Auslenkungsrichtung 28 eine ausreichende Zentrierungswirkung auf das Geberelement 20 bzw. den zylindrischen Stift 22 auszuüben.

Im vorliegenden Fall ist eine der Aussparung 40 bezüglich der vorgegebenen Auslenkungsrichtung 28 gegenüberliegend angeordnete weitere Aussparung 42 vorgesehen, sodass der Übertragung von bei der Betätigung des Geberelements 20 auftretenden Zugwie auch Druckkräften gleichermaßen Rechnung getragen werden kann.

Mit anderen Worten wird das Geberelement 20 in unbetätigtem, mithin kraftfreiem Zustand von der elastischen Tülle 38 allseitig gegenüber dem Betätigungselement 14 auf Abstand gehalten, sodass ein möglicher Schwingungseintrag über den daran angebrachten Bowdenzug 12 auf das Geberelement 20 weitgehend ausgeschlossen ist. Durch Auslenkung des Hand- bzw. Fußhebels lässt sich das Geberelement 20 hingegen aufgrund der zum Betätigen des Bowdenzugs 12 aufgebrachten Zug- bzw. Druckkraft innerhalb des Montageauges 16 unmittelbar an das Betätigungselement 14 pressen, was zu einem präzise definierten Druckpunkt führt.

Des Weiteren ist an der elastischen Tülle 38 ein an einer jeweiligen Stirnseite 44, 46 des Montageauges 16 umlaufender Kragen 48, 50 ausgebildet (siehe Fig. 4). Der umlaufende Kragen 48, 50 dient der Axialzentrierung der elastischen Tülle 38 innerhalb des Montageauges 16. Im Sinne der Erzielung einer möglichst hohen Dämpfungswirkung besteht die elastische Tülle 38 aus einer Gummimischung mit einer Härte im Bereich von 20 bis 90 Shore A.

Zur Verwirklichung einer Verdreh- bzw. Axialsicherung der elastischen Tülle 38 innerhalb des Montageauges 16 sind an beiden Stirnseiten 44, 46 des Montageauges 16 jeweils zwei nebeneinanderliegende Vorsprünge 52, 54 vorgesehen (siehe Fig. 3), von denen jeder in eine zugehörige Ausnehmung 56, 58 innerhalb des Kragens 48, 50 der elastischen Tülle 38 eingreift. Bei den Vorsprüngen 52, 54 handelt es sich im vorliegenden Fall um Federstifte, die mit beidseitigem Überstand in stirnseitig eingebrachte Durchgangsbohrungen am abgeflachten Kopf 30 des Betätigungselements 14 eingepresst sind und in damit fluchtende Öffnungen im Kragen 48, 50 der elastischen Tülle 38 hineinragen.

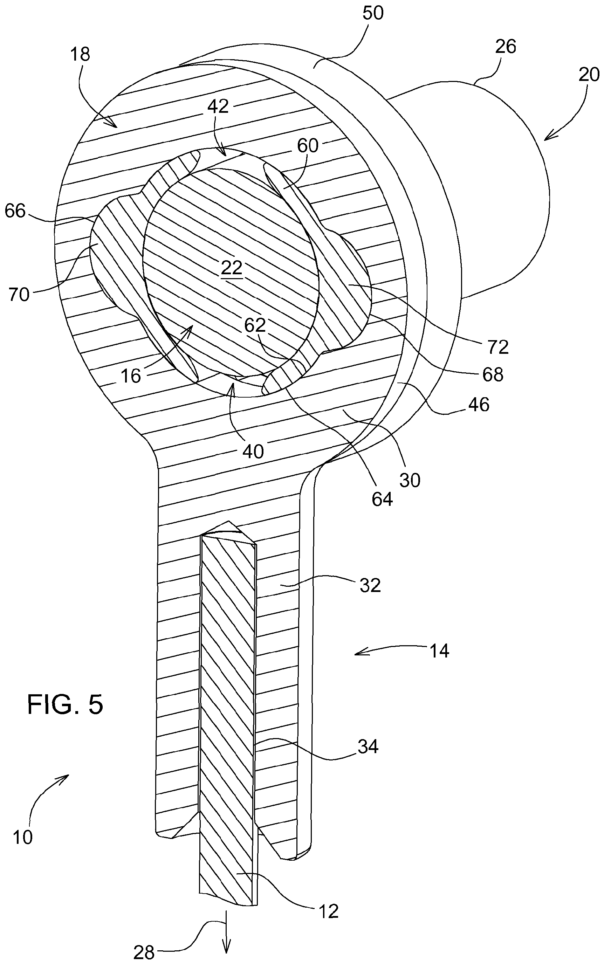

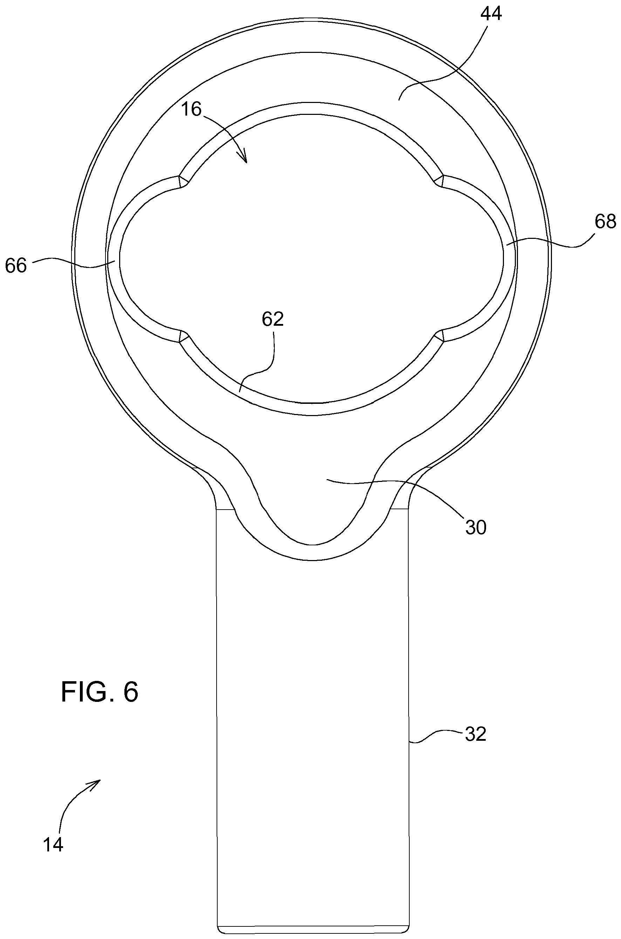

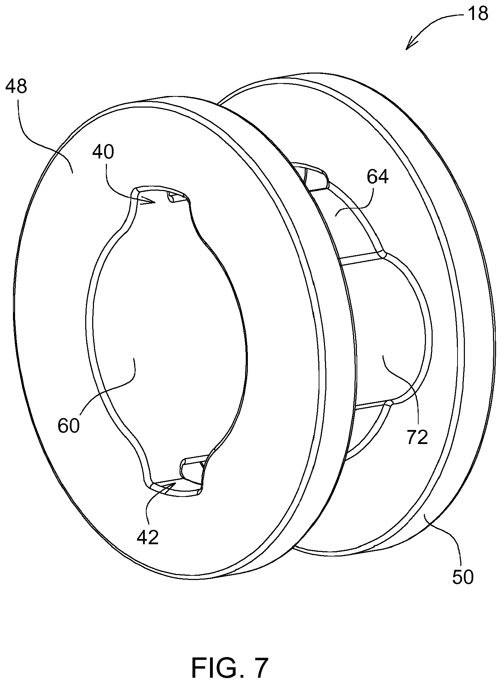

Fig. 5 zeigt ein zweites Ausführungsbeispiel der erfindungsgemäßen Anordnung. Dieses unterscheidet sich von dem in Fig. 1 dargestellten ersten Ausführungsbeispiel hinsichtlich der Ausgestaltung des Betätigungselements 14 bzw. des Dämpfungselements 18, was im Detail in Fig. 6 bzw. Fig. 7 zu sehen ist.

Demgemäß ist eine abgewandelte elastische Tülle 60 vorgesehen, die eine mit einer asymmetrischen Innenkontur 62 des Montageauges 16 korrespondierende Außenkontur 64 aufweist, wodurch eine Verdrehsicherung bzw. Radialzentrierung der elastischen Tülle 60 innerhalb des Montageauges 16 verwirklicht ist. Zu diesem Zweck sind entlang der Innenkontur 62 des Montageauges 16 verlaufende Quertaschen 66, 68 ausgebildet (siehe Fig. 6), in die an der Außenkontur 64 der elastischen Tülle 60 ausgeformte Querbacken 70, 72 (siehe Fig. 7) formschlüssig eingreifen.

Bezüglich der Funktion der Anordnung 10 sei im Übrigen auf die Beschreibung des ersten Ausführungsbeispiels verwiesen.

## Patentansprüche

1. Anordnung zur Schwingungsisolierung bowdenzugbetätigter Komponenten, umfassend einen Bowdenzug (12), ein an dem Bowdenzug (12) endseitig angebrachtes Betätigungselement (14) mit einem Montageauge (16), ein in dem Montageauge (16) formschlüssig angeordnetes Dämpfungselement (18), sowie ein innerhalb des Dämpfungselements (18) gelagertes auslenkbares Geberelement (20) zur Betätigung des Bowdenzugs (12), wobei das Dämpfungselement (18) als elastische Tülle (38, 60) mit einer in einer vorgegebenen Auslenkungsrichtung (28) des Geberelements (20) liegenden Aussparung (40, 42) derart ausgebildet ist, dass das Geberelement (20) in unbetätigtem Zustand innerhalb der elastischen Tülle (38, 60) eine mittenzentrierte Stellung einnimmt **dadurch gekennzeichnet, dass** das Geberelement (20) bei Einwirkung einer auslenkenden Betätigungskraft (F_{b}) unter Kompression der elastischen Tülle (38, 60) im Bereich der Aussparung (40, 42) mit dem Montageauge (16) unmittelbar in Anlage bringbar ist.

2. Anordnung nach Anspruch 1, **dadurch gekennzeichnet, dass** das Geberelement (20) Bestandteil eines als Hand- oder Fußhebel ausgebildeten Bedienelements für ein Fahrzeug ist, das zur Betätigung einer während der Fahrt zu lösenden Feststell- oder Parkbremse vorgesehen ist.

3. Anordnung nach Anspruch 1 oder 2, **dadurch gekennzeichnet, dass** an der elastischen Tülle (38, 60) ein an einer jeweiligen Stirnseite (44, 46) des Montageauges (16) umlaufender Kragen (48, 50) ausgebildet ist.

4. Anordnung nach Anspruch 3, **dadurch gekennzeichnet, dass** an einer Stirnseite (44, 46) des Montageauges (16) wenigstens ein Vorsprung (52, 54) vorgesehen ist, der in eine zugehörige Ausnehmung (56, 58) im Kragen (48, 50) der elastischen Tülle (38, 60) eingreift.

5. Anordnung nach wenigstens einem der Ansprüche 1 bis 4, **dadurch gekennzeichnet, dass** die elastische Tülle (38, 60) eine mit einer asymmetrischen Innenkontur (62) des Montageauges (16) korrespondierende Außenkontur (64) aufweist.

6. Anordnung nach wenigstens einem der Ansprüche 1 bis 5, **dadurch gekennzeichnet, dass** die elastische Tülle (38, 60) aus einer Gummimischung mit einer Härte im Bereich von 20 bis 90 Shore A besteht.

## Claims

1. Arrangement for the vibration isolation of Bowden-cable-actuated components, comprising a Bowden cable (12), an actuating element (14), attached to the end of the Bowden cable (12), with a mounting eye (16), a damping element (18) arranged in a form-fitting manner in the mounting eye (16), and a deflectable transducer element (20), mounted within the damping element (18), for actuating the Bowden cable (12), wherein the damping element (18) is configured as an elastic bushing (38, 60) with a cutout (40, 42) lying in a predefined deflection direction (28) of the transducer element (20), such that the transducer element (20), in an unactuated state, takes up a centred position within the elastic bushing (38, 60), **characterized in that** the transducer element (20), upon application of a deflecting actuating force (F_{b}), is able to be brought directly into contact with the mounting eye (16) in the region of the cutout (40, 42) under compression of the elastic bushing (38, 60).

2. Arrangement according to Claim 1, **characterized in that** the transducer element (20) is a constituent part of a control element, in the form of a hand or foot lever, for a vehicle, which is provided for actuating an immobilization or parking brake to be released while travelling.

3. Arrangement according to Claim 1 or 2, **characterized in that** a collar (48, 50) encircling each end face (44, 46) of the mounting eye (16) is formed on the elastic bushing (38, 60).

4. Arrangement according to Claim 3, **characterized in that** at least one protrusion (52, 54) is provided on one end face (44, 46) of the mounting eye (16), said protrusion (52, 54) engaging in an associated recess (56, 58) in the collar (48, 50) of the elastic bushing (38, 60) .

5. Arrangement according to at least one of Claims 1 to 4, **characterized in that** the elastic bushing (38, 60) has an external contour (64) corresponding to an asymmetric internal contour (62) of the mounting eye (16) .

6. Arrangement according to at least one of Claims 1 to 5, **characterized in that** the elastic bushing (38, 60) consists of a rubber compound with a hardness in the range from 20 to 90 Shore A.

## Revendications

1. Ensemble destiné à isoler des composants actionnés par câble Bowden contre des vibrations, l'ensemble comprenant un câble Bowden (12), un élément d'actionnement (14) pourvu d'un œillet de montage (16) fixé à une extrémité au câble Bowden (12), un élément d'amortissement (18) disposé par complémentarité de formes dans l'œillet de montage (16), et un élément transmetteur (20) pouvant être dévié, logé à l'intérieur de l'élément d'amortissement (18) et destiné à actionner le câble Bowden (12), l'élément d'amortissement (18) étant conçu comme un passe-câble élastique (38, 60) pourvu d'un évidement (40, 42) ménagé dans une direction de déviation prédéterminée (28) de l'élément transmetteur (20) de telle sorte que l'élément transmetteur (20) occupe, à l'état non actionné, une position centrée dans le l'œillet élastique (38, 60), **caractérisé en ce que**, sous l'action d'une force d'actionnement et de déviation (F_{b}), l'élément transmetteur (20) peut être amené en contact direct avec l'œillet de montage (16) sous compression du passe-câble élastique (38, 60) dans la zone de l'évidement (40, 42).

2. Ensemble selon la revendication 1, **caractérisé en ce que** l'élément transmetteur (20) fait partie d'un élément de commande conçu comme un levier à main ou au pied et destiné à un véhicule, lequel élément transmetteur est prévu pour actionner un frein d'immobilisation ou de stationnement à desserrer pendant le roulement.

3. Ensemble selon la revendication 1 ou 2, **caractérisé en ce qu'**un rebord (48, 50) s'étendant circonférentiellement sur un côté frontal respectif (44, 46) de l'œillet de montage (16) est formé sur le passe-câble élastique (38, 60).

4. Ensemble selon la revendication 3, **caractérisé en ce qu'**au moins une saillie (52, 54), qui s'engage dans un évidement associé (56, 58) du rebord (48, 50) du passe-câble élastique (38, 60), est prévue sur un côté frontal (44, 46) de l'œillet de montage (16).

5. Ensemble selon l'une au moins des revendications 1 à 4, **caractérisé en ce que** le passe-câble élastique (38, 60) présente un contour extérieur (64) correspondant à un contour intérieur asymétrique (62) de l'œillet de montage (16).

6. Ensemble selon l'une au moins des revendications 1 à 5, **caractérisé en ce que** le passe-câble élastique (38, 60) est formé à partir d'un mélange de caoutchoucs d'une dureté comprise entre 20 et 90 Shore A.
